# EUROPÄISCHE PATENTSCHRIFT

(11) **EP 2 922 660 B1**
(45) Veröffentlichungstag und Bekanntmachung des Hinweises auf die Patenterteilung: **15.11.2017**
(21) Anmeldenummer: 13795215.6
(22) Anmeldetag: 20.11.2013
(51) Int. Cl.: B23Q 1/52, B23Q 5/10, B23Q 39/02, B23Q 39/00

(54) **MASCHINENBAUGRUPPE, FERTIGUNGSMASCHINE MIT MASCHINENBAUGRUPPE SOWIE VERWENDUNG UND VERFAHREN ZUR FERTIGUNG VON ROTATIONSBAUTEILEN**
MACHINE ASSEMBLY, PRODUCTION MACHINE WITH MACHINE ASSEMBLY, USE AND METHOD FOR PRODUCING ROTATION COMPONENTS
MODULE DE MACHINE, MACHINE DE FABRICATION POURVUE D'UN MODULE DE FABRICATION ET UTILISATION ET PROCÉDÉ DE FABRICATION D'ÉLÉMENTS ROTATIFS

(30) Priorität: 23.11.2012 DE 102012221484
(43) Veröffentlichungstag der Anmeldung: 30.09.2015
(73) Patentinhaber: Fraunhofer-Gesellschaft zur Förderung der angewandten Forschung e.V., 80686 München (DE); Technische Universität Berlin, 10623 Berlin (DE)
(72) Erfinder: UHLMANN, Eckart, 25368 Kiebitzreihe (DE); ESSMANN, Jörg, 12527 Berlin (DE); OBERSCHMIDT, Dirk, 16515 Oranienburg (DE); MAHR, Frederik, 40699 Erkrath (DE); HERFERT, Frank, 13086 Berlin (DE); POLTE, Mitchel, 13509 Berlin (DE)
(74) Vertreter: Eisenführ Speiser
(86) Internationale Anmeldenummer: PCT/EP2013/074287
(87) Internationale Veröffentlichungsnummer: WO 2014/079883

(56) Entgegenhaltungen:
- EP-A1- 1 034 881
- EP-A1- 1 413 395
- WO-A1-2012/046117
- DE-A1- 1 914 104
- DE-A1-102011 013 457
- DE-B3- 10 349 437
- US-A- 4 064 774
- US-A- 4 512 223

## Beschreibung

Die Erfindung betrifft eine Maschinenbaugruppe zur Verwendung in einer Fertigungsmaschine nach dem Oberbegriff des Anspruchs 1 (siehe z.B. DE 10 2011 013 457 A). Die Erfindung betrifft auch eine entsprechende Fertigungsmaschine mit der Maschinenbaugruppe sowie eine Verwendung und ein Verfahren zur Fertigung von Rotationsbauteilen.

Eine Fertigungsmaschine im Sinne dieser Anmeldung ist allgemein als eine Arbeitsmaschine zu verstehen, die geometrisch bestimmte Werkstücke nach vorgegebenem Fertigungsablauf durch Zusammenwirken von Werkzeugen oder dergleichen Fertigungsmitteln einer Werkzeugaufnahme von einem Ausgangszustand in eine festgelegte Zwischenfolge oder anderen Fertigungszustand überführen. Eine Fertigungsmaschine kann zur Bearbeitung von Metall, Holz, Glas, Kunststoffen, Keramiken usw. eingesetzt werden. Üblicherweise können Werkstoffe mit teilweise gleichartigem oder teilweise verschiedenartigen Fertigungsmaschinen bearbeitet werden, die den besonderen Eigenschaften dieser Werkstoffe entsprechen; insbesondere kann es sich bisher dazu als erforderlich erweisen, ein Werkstück in einer Werkstückaufnahme umzuspannen, d. h. herauszunehmen und neu in die Werkstückaufnahme einzubringen.

Grundsätzlich sind eine Grund- und Deckfläche von Werkstücken mit beliebiger, vorzugsweise zylindrischer, Außenkontur sequenziell zu bearbeiten. Dabei wird zunächst eine Seite bearbeitet, anschließend umgespannt, und dann die zweite Seite aus gleicher Arbeitsrichtung wie bereits die erste Seite bearbeitet. Dies hat auch einen Vorteil für symmetrisch zu bearbeitende Grund- und Deckflächen, da dann eine Werkzeugführung für Grund- und Deckfläche grundsätzlich identisch sein kann. Zur Einspannung werden z. B. klassische Backenfutter oder Vakuumspannfutter eingesetzt.

Bei der spanenden Bearbeitung, insbesondere der Hochpräzisions- und Ultrapräzisionszerspanung mit geometrisch bestimmter Schneide an einer Grund- und Deckfläche von Werkstücken mit beliebiger, vorzugsweise zylindrischer, Außenkontur besteht allerdings durch mehrfaches Umspannen ein hohes Fehlerpotential im Hochpräzisions- und Ultrapräzisionsbereich; dies kann z. B. Form- und Geometriegenauigkeit betreffen. Darüber hinaus besteht ein sehr hoher Rüstaufwand für das Einmessen eines Werkstückes, insbesondere bei geforderter Positionsübereinstimmung von Konturelementen auf Grund- und Deckfläche.

Nachteile der einseitigen Bearbeitung können, insbesondere in dem vorgenannten Hochpräzisions- und Ultrapräzisionsbereich, auch sein:
- Spannfehler durch die sequenzielle Einspannung (Verformung in alle Richtungen),
- Mitführung bestehender Geometriefehler bei der jeweiligen Bearbeitung einer Seite,
- Hohe Nebenzeiten durch Einmess- und Rüstvorgänge,
- Nahezu unkontrollierte Parallelität der Werkstückseiten.

Auch können grundsätzliche Bearbeitungseinschränkungen bei einer einseitigen Bearbeitung gegeben sein. So ist z. B. eine Fixierung von Flächen mit Freiformen nahezu unmöglich oder eine Korrelation von Geometrieelementen der jeweils einen Seite zur jeweils anderen Seite nur mit Einschränkung möglich.

Für besondere Anwendungen ist es zwar bekannt, ein Werkstück von mehreren Seiten zu bearbeiten. So ist beispielsweise aus DE 10 2009 052 070 A1 eine Vorrichtung zur Doppelseitenbearbeitung von Halbleiter-Wavern bekannt, wobei eine obere und eine untere Arbeitsscheibe mit einem dazwischen gebildeten Arbeitsspalt zur Aufnahme des Halbleiter-Wavers bekannt; die Arbeitsscheiben weisen Durchführungen für flüssiges Arbeitsmittel auf.

Auch sind beispielsweise sogenannte Multitask-Maschinen bekannt, die mit einem, zwei oder mehr Revolvern für auswechselbare Werkzeuge ausgestattet sind und welche es erlauben, ein Werkstück von mehreren Seiten mit stehenden oder rotierenden Werkzeugen zu bearbeiten.

Auch ist neben der klassischen seriellen Kinematik mit einem seriellen Aufbau einzelner Vorschubbewegungen --welche der Reihe nach aufeinander aufbauen-- auch eine Maschinenbaugruppe mit einer sogenannten Parallelkinematik --wie beispielsweise sogenannten Hexapoden oder dergleichen-- bekannt, welche es erlauben, ein Werkstück in Bezug auf ein Werkzeug in verschiedenster Weise auszurichten.

Alle diese Ansätze bringen jedoch ebenfalls ggfs. Genauigkeitsprobleme mit sich.

Aus DE 10 2009 025 726 A1 ist beispielsweise ein Verfahren und eine Vorrichtung zur inkrementellen Blechumformung bekannt, bei dem ein in einer Haltevorrichtung eingespannter Blechrohling durch lokale plastischen Umformung mittels eines relativ zu dem Blechrohling bewegbaren Werkzeugs sukzessiv umgeformt wird; dazu sind mindestens zwei voneinander beabstandete zueinander bewegliche Werkzeuge vorgesehen, die den Blechrohling in mindestens zwei voneinander getrennten Umformzonen gleichzeitig umformen wobei sich die Werkzeuge bevorzugt gegenüberliegen.

Aus DE 507 375 ist eine Werkzeugmaschine zur Herstellung von Ausdrehungen von vorzugsweise V-förmigem Querschnitt in Bohrungen von Arbeitsstücken bekannt. Dazu ist die Verwendung zweier gleichachsig angeordneter gegeneinander arbeitender Werkzeuge vorgesehen, die von den Stirnwänden des Arbeitsstücks aus zugestellt werden. Das Werkstück ist dazu in einer Klemmvorrichtung gehalten.

Aus US 3,542,354 oder US 3,516,681 ist es grundsätzlich bekannt, ein Werkstück in einer unter mechanisch aufgebrachtem Druck stehenden oder in einer mit fluidem Druckmittel unter Druck gesetzten Buchse zu halten. Aus US 3,762, 730 ist es grundsätzlich bekannt, ein Werkstück auf einem Keilnutsplint zu halten.

Während der grundsätzliche Ansatz einer beidseitigen Werkstückbearbeitung mit einer ersten und einer zweiten Werkzeugaufnahme gemäß der eingangs genannten Art an sich Erfolg versprechend ist, so zeigt sich dennoch, dass die bisherigen Ausführungen einer Baugruppengeometrie und Baugruppenkinematik, insbesondere Werkzeug- und/oder Werkstückkinematik, noch verbesserungswürdig sind. Dies gilt insbesondere im Hinblick auf die oben angeführten Genauigkeitsnachteile; diese wurden bislang nicht berücksichtig. Wünschenswert ist es, eine Genauigkeit bei einer beidseitigen Werkstückbearbeitung noch weiter zu verbessern.

An dieser Stelle setzt die Erfindung an, deren Aufgabe es ist, eine Vorrichtung und ein Verfahren anzugeben, mittels dem eine beidseitige Werkstückbearbeitung mit wesentlich erhöhter Genauigkeit möglich ist. Insbesondere sollen Fehler durch Verformungsgeometrien, vor allem Parallelitäts- und Planfehler, in verbesserter Weise vermeidbar sein. Insbesondere soll bei der Vorrichtung und dem Verfahren das Werkstück in verbesserter Weise aufnehmbar sein. Insbesondere soll ein Bearbeitungsgeometrie und/oder Bearbeitungskinematik bei der Vorrichtung und dem Verfahren in verbesserter Weise ausgeführt sein.

Die Aufgabe betreffend die Vorrichtung wird durch die Erfindung mit einer Maschinenbaugruppe des Anspruchs 1 gelöst. Die Erfindung führt auch auf eine Fertigungsmaschine des Anspruchs 22. Insbesondere ist die Fertigungsmaschine in Form einer Werkzeugmaschine gebildet. Besonders vorzugsweise ist die Werkzeugmaschine zum Fügen, Trennen, Umformen, aber auch ggf. Beschichten und Ändern von Stoffeigenschaften ausgebildet.

Die Erfindung führt auch auf eine Verwendung der erfindungsgemäßen Maschinenbaugruppe und/oder der erfindungsgemäßen Fertigungsmaschine zur Herstellung eines Werkstücks, insbesondere mit besonders hohen Genauigkeitsanforderungen.
Bevorzugt ist das Werkstück in Form einer Strahlführungsscheibe für eine Strahlführung einer strahlführenden Einrichtung gebildet. Die Strahlführungsscheibe kann insbesondere Teil einer Licht-Optik oder einer Teilchenoptik wie einer Elektronenoptik, Isotopenoptik, Elementarteilchenoptik oder sonstigen Teilchenoptik der Strahlführung der strahlführenden Einrichtung (etwa ein Beschleuniger) sein. Bevorzugt ist das Teil eine zweiseitige bearbeitete Linse, beispielsweise eine Germanium-Linse für Infrarot-Anwendungen.
Bei der eingangs genannten Maschinenbaugruppe ist erfindungsgemäß vorgesehen, dass die Werkstückaufnahme eine Hauptspindel mit einer von der ersten zur zweiten Seite der Werkstückaufnahme verlaufenden Drehachse aufweist, die zur Aufnahme eines Werkstücks entlang der Drehachse ausgebildet ist.

Damit ist --aufbauend auf dem grundsätzlich vorteilhaften Kinematik-Prinzip einer beidseitigen Werkstückbearbeitung-- das Werkstück an zentraler Position der Maschinenbaugruppe eingebracht und durch die Hauptspindel mit Vorteil versehen, besonders sicher und gleichzeitig drehbar gelagert; dies ist insbesondere auch für die Bearbeitung von vergleichsweise harten Werkstückmaterialen von Vorteil, bei denen die Bearbeitungskräfte entsprechend hoch sein sollten. Es zeigt sich, dass eine Lagerung, insbesondere eine drehende Lagerung, gemäß der erfindungsgemäßen Kinematik mit der Hauptspindel besonders hohen Kräften mit verlangten hohen Genauigkeitsanforderungen im Hochpräzisions- und Ultrapräzisionsbereich Stand zuhalten in der Lage ist.

Die Erfindung hat erkannt, dass sich zur Verbesserung einer Genauigkeit, eine Hauptspindel in der Werkstückaufnahme besonders gut eignet, die mit ihrer Drehachse von der ersten zur zweiten Seite der Werkstückaufnahme ausgerichtet ist; die Spindelachse weist insbesondere in die gleiche Richtung wie die Rotationsachse des Werkstücks.

Insbesondere kann eine Zustellrichtung des ersten und/oder zweiten Werkzeugs parallel zur Drehachse verlaufen; in einer solchen Weiterbildung sind vorteilhaft schräg angreifende Kräfte oder dergleichen weitgehend vermieden.

Insbesondere eignen sich die Maschinenbaugruppe und die Fertigungsmaschine gemäß dem Konzept der Erfindung zur Umsetzung einer trennenden Bearbeitung, insbesondere einer spanenden- und/oder zerspanenden Bearbeitung des Werkstücks. Die Vorteile des Konzepts der Erfindung kommen insbesondere bei Rotationsbauteilen, insbesondere zylindrischen oder sonstigen rotationssymmetrischen oder drehwinkelsymmetrischen Bauteilen oder dergleichen Werkstücken zum Tragen. Insbesondere hat sich das Konzept der Erfindung bewährt für Fälle in denen hohe Planarität und kollineare Ausrichtung einer Grund- und Deckfläche bei aufspanender oder zerspanender oder sonstiger spanender Bearbeitung am Werkstück garantiert werden muss; insbesondere zeigt sich dieser Vorteil, wenn es um die Fertigung von Werkstücken für wissenschaftlicher Anlagen geht.

Gleichwohl ist das Konzept der Erfindung nicht beschränkt auf die vorgenannten, besonders bevorzugten Anwendungsbeispiele und kann eingesetzt werden bei Fertigungsmaschinen und Werkstoffen der eingangs genannten allgemeinen Art.

Das Konzept der Erfindung führt zur Lösung der Aufgabe hinsichtlich des Verfahrens auch auf ein Verfahren des Anspruchs 24. Das Verfahren lässt sich insbesondere unabhängig von der Art oder einer Abwandlung der erfindungsgemäßen Maschinenbaugruppe realisieren; ist gleichwohl besonders vorteilhaft mit der erfindungsgemäßen Maschinenbaugruppe umsetzbar. Das Konzept des Verfahrens ermöglicht eine vergleichsweise hohe Genauigkeit bei der Bearbeitung von Rotationsbauteilen.

Erfindungsgemäß sind die Schritte vorgesehen:
- Rotieren des Werkstücks um die Drehachse mittels der Hauptspindel;
- Zustellen eines ersten Werkzeugs der ersten Werkzeugaufnahme und eines zweiten Werkzeugs der zweiten Werkzeugaufnahme entlang der Drehachse;
- Vorschieben des Werkstücks unter Vorschub der Hauptspindel und/oder wenigstens eines des ersten und zweiten Werkzeugs.

Bevorzugt ist eine Vorschubrichtung senkrecht zu einer Zustellrichtung orientiert.

Das Konzept der Erfindung bietet insgesamt mit der erfindungsgemäßen Maschinenbaugruppe oder Fertigungsmaschine und dem Verfahren eine vergleichsweise hohe Flexibilität in der Art der Bearbeitung (Werkzeugwahl, Zustell- und Vorschubvorgänge etc.) zur Verfügung zu stellen. Außerdem erweist sich das Konzept als vergleichsweise einfach und damit sicher und schnell in der Handhabung. Entsprechend kann ein Bearbeitungsvorgang des Werkstücks mit vergleichswiese hoher Geschwindigkeit durchgeführt werden und erweist sich erfindungsgemäß insbesondere bei Verwendung für eine Strahlführungsscheibe als überlegen gegenüber bisherigen Ansätzen. Dies ist insbesondere bei hohen Stückzahlen und automatisierter Bearbeitung eines bzw. einer Vielzahl von Werkstücken von erheblichem Vorteil.

Vorteilhafte Weiterbildungen in der Erfindung sind den Unteransprüchen zu entnehmen und geben im Einzelnen vorteilhafte Möglichkeiten an, dass oben erläuterte Konzept im Rahmen der Aufgabenstellung, sowie hinsichtlich weiterer Vorteile zu realisieren.

Im Rahmen einer besonders bevorzugten Weiterbildung weist die Hauptspindel eine drehbare Hohlwelle auf, in deren Innenraum das Werkstück aufnehmbar ist; insbesondere ist dazu vorgesehen, dass die Hauptspindel in Form der Hohlwelle gebildet ist.

Besonders bevorzugt ist die drehbare Hohlwelle als Teil eines Hohlwellenmotors gebildet. Damit lässt sich die Hauptspindel in besonders platzsparender Weise und mit vergleichsweise geringen Halteunsicherheiten realisieren; dies ist insbesondere den Genauigkeitsanforderungen gemäß dem Konzept der Erfindung zuträglich. Besonders bevorzugt kann die Hohlwelle einen Rotor des Motors ausbilden, wobei der Rotor in einem die Hohlwelle umfänglich umgebenden, einen Stator ausbildenden Haltering gelagert ist.

Zusätzlich oder alternativ kann die Hohlwelle auch eine Aufnahme, wie z. B. Spannmittel oder dergleichen Aufnahmemittel tragende drehbare Hohlwelle aufweisen. Insbesondere eignet sich eine solche mit Spannmitteln versehen Hohlwelle bevorzugt zur Lagerung in einem beliebigen Haltering; bevorzugt, aber nicht notwendigerweise, kann der Haltering als ein Stator ausgebildet sein. Die Ausführung der Spannmittel oder anderer Aufnahmemittel an der Hohlwelle ist ebenfalls den Genauigkeitsanforderungen zuträglich. Beispielsweise kann die Hauptspindel in Form einer drehbaren Hohlwelle gebildet sein, die auf einer deren Innenraum zugewandten Seite die Aufnahmemittel, insbesondere Spannmittel aufweist. Die Spannmittel oder dergleichen Aufnahmemittel können insbesondere radial derart zustellbar sein, dass ein Werkstück --bevorzugt in selbstzentrierender Weise-- auf der Drehachse festgelegt wird.

Auch wenn die vorgenannten Weiterbildungen eine Hauptspindel mit vorzugsweise drehbarer Hohlwelle vorschlagen, so ist gleichwohl nicht ausgeschlossen, dass die Hauptspindel auch in grundsätzlich anderer Weise gebildet ist. Beispielsweise kann die Hauptspindel auch eine Vollwelle aufweisen, auf deren Umfang das Werkstück aufnehmbar ist; insbesondere ist dazu die Hauptspindel selbst als Vollwelle ausgebildet. Auch eine Vollwelle kann bevorzugt Teil eines Motors sein, wie beispielsweise als Antriebswelle eines Motors auf einer Achse des Motors gebildet sein.

Auch wenn die vorgenannten Weiterbildungen bevorzugt eine Hauptspindel --sei es als Hohlwelle oder Vollwelle-- als Teil eines Motors bevorzugt vorschlagen, ist es gleichwohl auch möglich, die Hauptspindel auf andere Art anzutreiben; beispielsweise kann ein peripherer Antrieb vorgesehen sein, der die Hauptspindel antreibt. Möglich ist beispielsweise ein Antrieb über Riemen, Zahnrad oder ein dergleichen mechanisches Antriebssystem.

Die Hauptspindel kann bevorzugt eine Aufnahme für das Werkstück aufweisen, die ein hydraulisches und/oder pneumatisches Spannmittel hat, wobei ein hydraulisches und/oder pneumatisches Spannmittel einen Druckmantel zur Aufnahme eines unter Kolbenbetrieb generierten Druckmittels aufweist. Es hat sich gezeigt, dass mit einem unter Kolbenbetrieb generierten Druckmittel das Werkstück besonders sicher und den Genauigkeitsanforderungen genügenden Haltekräften fest zu halten ist. Zudem zeigt sich, dass eine Kolben-Druckmittelfördereinrichtung bei einer Maschinenbaugruppe und/oder Fertigungsmaschine vorteilhaft platziert werden kann, insbesondere ohne eine Zugänglichkeit eines Werkstücks bei der Bearbeitung desselben zu beeinträchtigen.
Der Druckmantel zur Aufnahme des Druckmittels kann bevorzugt an einer Spannbuchse, vorzugsweise für eine Hohlwelle, oder an einem Spannzapfen, vorzugsweise für eine Vollwelle, angeordnet sein.
Die weiteren bevorzugten Weiterbildungen ergeben sich insbesondere unter Verbesserung von Vorteilen betreffend die Geometrie und Kinematik der Maschinenbaugruppe.

Grundsätzlich hat es sich als bevorzugt erwiesen, dass die erste und/oder zweite Werkzeugaufnahme mit einer Serienkinematik eingerichtet ist. Ein Serienkinematik --d. h. ein serieller Aufbau einzelner Vorschubbewegungen, die der Reihe nach nacheinander aufbauen bzw. als einzelne Vorschubbewegung einer Werkzeugaufnahme vorgesehen sind-- erweisen sich hinsichtlich der Genauigkeitsanforderungen als besonders vorteilhaft.

Insbesondere ist es bevorzugt, dass eine erste und/oder zweite Werkzeugaufnahme eine Zustellbewegung ausgebildet ist.

In einer bevorzugten ersten Variante ist es bevorzugt, dass eine Werkstückaufnahme zur Ausführung einer Vorschubbewegung ausgebildet ist.

Insbesondere ist es bevorzugt, dass die Hauptspindel, insbesondere Wellevorzugsweise Hohlwelle oder Vollwelle-- ausgebildet ist, in rotierender Weise eine Schnittbewegung eines Werkzeugs am Werkstück auszuführen. Grundsätzlich kann die Schnittbewegung auch jede andere Trennbewegung sein. Das Konzept der Erfindung sieht in grundsätzlicher Weise vor, dass Zustellbewegung, Hauptbewegung (Schnittbewegung) und Vorschubbewegung von weitgehend unabhängigen Einheiten, in einer ersten Variante von völlig unabhängigen Einheiten, ausgeführt werden.

Insbesondere ist vorgesehen, dass die Zustellbewegung eines Werkzeugs entlang der Drehachse der Hauptspindel ausgerichtet und senkrecht zu einer Vorschubrichtung eines Werkstücks mit der Werkzeugaufnahme ausgerichtet ist; dabei ist bevorzugt vorgesehen, dass die Hauptbewegung (Schnittbewegung) als Relativbewegung zwischen Werkzeug und Werkstück sich bei der Bearbeitung durch eine Rotation der Hauptspindel ergibt.

In einer anderen Variante kann die Vorschubbewegung der Hauptspindel (mit Werkstück relativ zu den Werkzeugen) ersetzt werden durch eine Vorschubbewegung des ersten und/oder zweiten Werkzeugs, wobei die Werkzeugaufnahme (bis auf die Rotationsfähigkeit der Hauptspindel) unbeweglich ist. Während die erstgenannte Variante eine größere Flexibilität erlaubt, so kann insbesondere die letztgenannte Variante den besonders hohen Genauigkeitsanforderungen zuträglich sein als auch einer weitgehend unabhängigen Werkzeugführung unabhängig von der Hauptbewegung (Schnittbewegung).

Ein Aufnahmeträger in Form eines Maschinenbettes ist bevorzugt ausgebildet, eine Führung für wenigstens einen Achsschlitten aufzunehmen. Ein Achsschlitten lässt sich mit vergleichsweise hoher Genauigkeit in einer Führung am Maschinenbett anbringen.

Es hat sich als vorteilhaft erwiesen, insbesondere bei allen vorgenannten Varianten, eine lineare serielle Kinematik, insbesondere Werkzeug- und oder Werkstück-Kinematik, vorzusehen. Gleichwohl kann für eine Bewegung eines Werkzeugs und/oder Werkstücks auch eine andere als eine Linearbewegung vorgesehen sein; beispielsweise ein Kreisführung oder eine andere gekrümmte Führung. Insbesondere kann eine Realisierung einer Linearbewegung, soweit bevorzugt, eines Werkzeugs auch jede andere Achsgeometrie bzw. Achsanordnung bei einer Führung (insbesondere auch Stapelung von Achsen möglich sein). Auch kann eine anhand der Zeichnung beispielhaft beschriebene Linearachse für eine Führung eines Achsschlittens einer Aufnahme in einer Alternative auch anders realisiert sein, beispielsweise als Rundachse oder anderweitig gekrümmte Achse. Insbesondere kann über die Kopplung zweier oder mehrerer rund oder gekrümmter Achsen ebenfalls eine Linearbewegung realisiert werden, die zwar im Einzelnen weniger ausführlich beschrieben gleichwohl jedoch als zur Erfindung zugehörige Variante zu verstehen ist.

Im Rahmen einer besonders bevorzugten Weiterbildung kann eine Führung für die Werkstückaufnahme und/oder die Werkzeugaufnahme eine Linearführung und/oder gekrümmte Führung, insbesondere Kreisführung, sein. Beispielsweise kann der Aufnahmeträger eine Führung für wenigstens einen Achsschlitten aufweisen und/oder die Werkstückaufnahme und/oder die Werkzeugaufnahme eine Anzahl von Führungszylindern aufweisen.

Insbesondere hat es sich als vorteilhaft erwiesen, dass wenigstens ein erster und ein zweiter Achsschlitten kollinear entlang der Drehachse ausgerichtet ist, wenigstens aber ausrichtbar ist bzw. beständig parallel ausgerichtet ist. Diese die konzipierte Maschinenkinematik unterstützende Baugruppengeometrie ist in besonders bevorzugter Weise auf die Bearbeitung von Werkstücken mit einer Grund- und Deckfläche ausgerichtet. Insbesondere hat es sich als vorteilhaft erwiesen, dass eine erste und zweite Führung für den ersten und zweiten Achsschlitten direkt im Maschinenbett vorgesehen ist.

In einer ersten Abwandlung einer Weiterbildung kann die erste und zweite Führung konstruktiv eine gemeinsame, insbesondere einstückige, Führung bilden; dies ist einer Sicherung einer Kollinearität zur Zustellung des ersten und zweiten Werkzeugs mit hoher Genauigkeit zuträglich.

In einer zweiten Abwandlung kann vorgesehen sein, dass die erste und zweite Führung konstruktiv zwei unabhängige, insbesondere separierte, Führungen bilden; dies ermöglicht bei gleichwohl vergleichsweise hoher Genauigkeit dennoch eine besonders unabhängige und flexible Führung des ersten und zweiten Werkzeugs.

Allgemein hat es sich als vorteilhaft erwiesen, dass die erste Werkzeugaufnahme wenigstens einen ersten Achsschlitten und die zweite Werkzeugaufnahme wenigstens einen zweiten Achsschlitten aufweist. Vorteilhaft ist der erste Achsschlitten der ersten Führung in Zustellrichtung bewegbar. Vorteilhaft ist der zweite Achsschlitten auf der zweiten Führung in Zustellrichtung bewegbar.

Insbesondere im Rahmen der oben genannten ersten Abwandlung hat es sich als vorteilhaft erwiesen, dass die Werkstückaufnahme einen dritten Achsschlitten aufweist, der die Hauptspindel trägt. Vorzugsweise ist für die Werkstückaufnahme eine dritte Führung in Vorschubrichtung vorgesehen. Dies sichert in vorteilhafter Weise eine genaue Vorschubbewegung der Werkstückaufnahme unabhängig von Zustellvarianten.

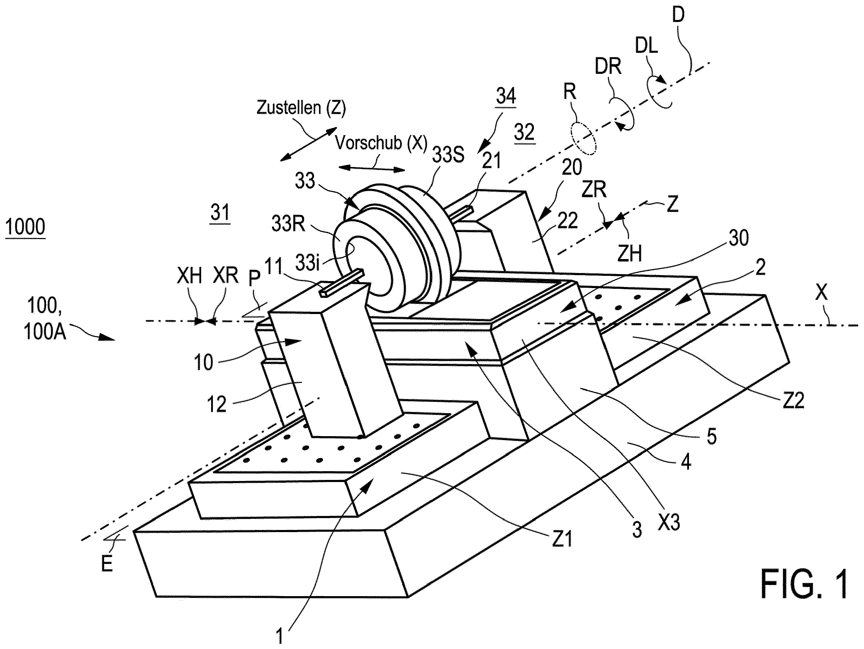

Im Rahmen einer besonders bevorzugt ausführbaren ersten Weiterbildung hat es sich als vorteilhaft erwiesen, dass der Aufnahmeträger ein Podest aufweist, das mit einer dritten Führung für den dritten Achsschlitten versehen ist. Dies erlaubt eine Zustellung der Werkzeuge vergleichsweise nah an das Werkstück, da Vorschubmittel für die Hauptspindel die Zustellmittel für die Werkzeuge im Platzbedarf nicht beeinträchtigen. Insbesondere ist vorgesehen eine dritte Führung in Vorschubrichtung gegenüber einer ersten und/oder zweiten Führung in Zustellrichtung erhöht auf dem Podest anzubringen. Eine besonders bevorzugte Ausführungsform ist im Rahmen der Zeichnung anhand Fig. 1 beschrieben.

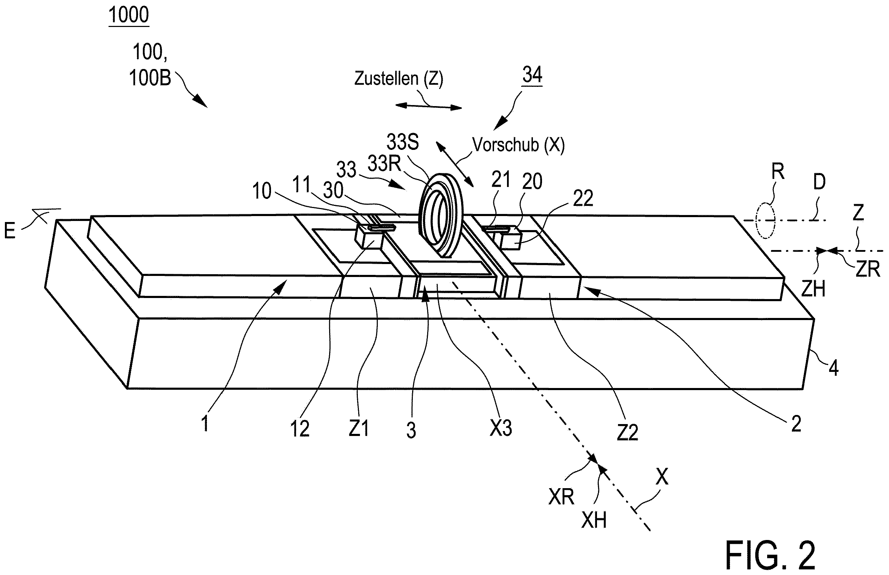

Eine besonders bevorzugt ausführbare zweite Weiterbildung sieht vor, dass der Aufnahmeträger eine dritte Führung aufweist, die auf der Höhe der ersten und/oder zweiten Führung liegt. Eine besonders bevorzugte Ausführungsform ist im Rahmen der Zeichnung anhand in Fig. 2 erläutert. Vorteilhaft ist, dass diese ausführbare Weiterbildung in der Höhe platzsparend ist und vergleichsweise einfach aufgebaut werden kann.

In einer bevorzugt ausführbaren dritten Weiterbildung ist vorgesehen, dass die Werkstückaufnahme direkt die Spindel trägt; insbesondere ist der Aufnahmeträger mit einem Podest versehen, das frei von einer Führung ist. Dies sichert zum Einen die vergleichsweise genaue Positionierung der Hauptspindel mit einem Werkstück ohne Unsicherheiten, die durch ein Vorschubmittel eingebracht werden könnten. Die Werkstückaufnahme gemäß der dritten ausführbaren Weiterbildung sieht nur die Bewegungsmittel für eine Schnittbewegung (Hauptbewegung), d. h. die Hauptspindel vor; im Übrigen ist das Podest mit dem Aufnahmeträger und der Hauptspindel ortsfest, vergleichsweise zentral in der Maschinenbaugruppe angeordnet. Diese Anordnung ist zum Einen einer hohen Genauigkeit zuträglich und im Übrigen erlaubt dies eine nicht nur flexible sondern auch eine unabhängige Führung des ersten Werkzeugs vom zweiten Werkzeug.

Insbesondere kann vorgesehen sein, dass die erste Werkzeugaufnahme einen ersten Achsschlitten in Vorschubrichtung und einen weiteren ersten Achsschlitten in Zustellrichtung aufweist. Zusätzlich oder alternativ kann unabhängig davon die zweite Werkzeugaufnahme einen zweiten Achsschlitten in Vorschubrichtung und einen weiteren zweiten Achsschlitten in Zustellrichtung aufweisen. Die Achsschlitten der ersten Werkzeugaufnahme bzw. die Achsschlitten der zweiten Werkzeugaufnahme können bevorzugt übereinander angeordnet sein; insbesondere ist der weitere Achsschlitten in Zustellrichtung unterhalb des Achsschlittens in Vorschubrichtung angeordnet; d. h. unterhalb des Achsschlittens zur Ausführung der Bewegung eines Werkzeugs in Vorschubrichtung angeordnet.

Im Rahmen einer besonders bevorzugten Weiterbildung, deren Konzept beispielhaft auch in der Zeichnung erläutert ist, erlaubt eine Maschinenkinematik die spanende Bearbeitung von Grund- und Deckfläche von Werkstücken mit beliebiger, vorzugsweise zylindrischer, Außenkontur in einer Aufspannung. Insbesondere wird dazu das Werkstück an zentraler Position der Maschine in einem als Hauptspindel wirkenden Hohlwellenmotor, der bevorzugt über ein spezielles Spannsystem verfügt, in der Art und Weise aufgenommen, dass die Spindelachse in gleicher Richtung verläuft wie die Rotationsachse des zylindrischen Werkstücks.

Bevorzugt befindet sich auf beiden Seiten des Werkstückes ein Zerspanwerkzeug auf jeweils einem Achsschlitten. Die Zustellung des Werkzeugs zur jeweiligen Werkstückseite erfolgt durch die Bewegung des das Werkstück tragenden Schlittens. Die Relativbewegung zwischen Werkzeug und Werkstück erfolgt durch die Rotation des Werkstückes in der Hauptspindel. Der Vorschub wird durch eine Relativbewegung der Hauptspindel inklusive Werkstück zu den Zerspanwerkzeugen realisiert.

Insgesamt bietet die im Konzept, insbesondere gemäß der Weiterbildungen, vorgesehene Maschinenkinematik --in bevorzugten Ausführungsformen beispielhaft nachfolgend anhand der Zeichnung beschrieben-- aufgrund der möglichen gleichzeitigen Bearbeitungen eines Werkstückes von zwei Seiten nicht nur die Verkürzung einer Hauptzeit von Zerspanen oder sonstigen Bearbeitungsprozessen. Weiter ist es insbesondere mit den nachfolgend beschriebenen Konstellationen möglich, abhängige Geometrie durch exakte Korrellation der Werkzeugposition auf zwei Werkstückseiten, nämlich einer Grund- und Deckfläche herzustellen. Darüber hinaus werden Passivkräfte bei simultaner Bearbeitung und bei übereinstimmenden technologischen Gegebenheiten auf der jeweilig bearbeiteten Werkstückfläche aufgehoben. Dadurch ergibt sich insgesamt eine Reduzierung von Spannfehlern als auch eine Reduzierung des Einmessaufwands, insbesondere bei ungleicher Bearbeitung der Flächen. Insgesamt reduziert sich das Fehlerpotenzial einer Bearbeitungsgenauigkeit bei gleichzeitiger und/oder beidseitiger Bearbeitung von Grund- und Deckflächen eines Rotationsbauteils.

Darüber hinaus hat es sich gezeigt, dass aufgrund des vorliegend erläuterten Konzepts insbesondere gemäß der Weiterbildungen, einer Maschinenkinematik charakteristische Bearbeitungsspuren am Werkstück entstehen, nämlich typischerweise feinste Rillen auf Grund- und Deckfläche mit beliebiger, vorzugsweise zylindrischer, Außenkontur. Die Bearbeitungsspuren weisen Charakteristika auf, welche die gleiche Bearbeitungsrichtung einer Bearbeitungsspur auf der Deckseite und einer Bearbeitungsspur auf der Grundfläche anzeigen. Auch dieses Merkmal eines "nicht-wechselnden" Drehsinns einer Bearbeitungsspur (im Unterschied zu einem Bearbeitungscharakteristikum bei umgespanntem Werkstück) hat Vorteile bei der Genauigkeit zur Bearbeitung eines Werkstücks.

Darüber hinaus ist es möglich --insbesondere möglich bei der Bearbeitung dünner Scheiben mit der gemäß dem Erfindungskonzept beschriebenen Maschinenkinematik-- eine hohe Planparallelität zu erreichen. Bei aufeinanderfolgender Bearbeitung dagegen mit Umspannen sind auf Ober- und Unterseite des Werkstücks (Deck- und Grundfläche) charakteristische korrelierende Verformungen erkennbar, die vorliegend vermieden sind.

Insofern eignet sich das Konzept der Erfindung, wie beispielhaft anhand der folgenden drei Ausführungsformen beschrieben, insbesondere zur Anwendung dort, wo die Grund- und Deckfläche von Werkstücken mit beliebiger, vorzugsweise zylindrischer, Außenkontur hoch- oder ultrapräzise bearbeitet werden sollen.

Besonders bevorzugte Beispiele für an sich beliebige rotationssymmetrische Bauteile aus beliebigen Materialien sind planparallele Scheiben, Linsen und Spiegel mit identischer oder abweichender Geometrie auf Vorder- und Rückseite, z. B. mit planer Grundfläche und einer beliebig geformten Deckfläche, Uhrwerkplatten, Werkzeuge und Formeinsätze für abformende Verfahren.

Ausführungsbeispiele der Erfindung --im Rahmen einer medizinischen Anwendungwerden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte Offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
Fig. 1 eine erste Ausführungsform einer Maschinenbaugruppe zur Verwendung in einer Horizontalwerkzeugmaschine, bei welcher der Aufnahmeträger ein Podest für die Werkstückaufnahme aufweist, das mit einem dritten Achsschlitten versehen ist, der die Hauptspindel trägt;
Fig. 2 eine zweite Ausführungsform einer Maschinenbaugruppe, bei der der Aufnahmeträger drei Achsschlitten einer ersten und zweiten Werkzeugaufnahme sowie einer Werkstückaufnahme aufweist, die auf gleicher Höhe angeordnet sind;
Fig. 3 eine dritte Ausführungsform einer Maschinenbaugruppe, bei der der Aufnahmeträger ein Podest aufweist, das zur Bildung der Werkstückaufnahme direkt eine Hauptspindel trägt und frei von einer sonstigen Führung ist und wobei jede der ersten und zweiten Werkzeugaufnahmen zwei Achsschlitten aufweist;
Fig. 4 eine Abwandlung einer Maschinenbaugruppe insbesondere aufbauend auf der in Fig. 3 gezeigten Maschinenbaugruppe, im Prinzip jedoch auch umsetzbar zur Bildung einer Werkzeugaufnahme bei einer Maschinenbaugruppe der Fig. 1 oder Fig. 2;
Fig. 5 ein Ablaufschema eines Verfahrens zur Fertigung von Rotationsbauteilen gemäß einer bevorzugten Ausführungsform, bei welcher im Rahmen einer Serienkinematik das Werkstück rotiert wird, zwei Werkzeuge zugestellt werden und das Werkstück vorgeschoben wird.

Im Folgenden werden beispielhaft für das Konzept der Erfindung einer beidseitig bearbeitbaren Werkstückaufnahme mit einer Hauptspindel drei Ausführungsformen einer Maschinenbaugruppe zur Verwendung in einer Werkzeugmaschine für ein Trennwerkzeug als Beispiel einer Fertigungsmaschine beschrieben; darin wird die Maschinenkinematik beispielhaft anhand einer Serienkinematik mit unterschiedlichen Konfigurationen von Linearachsen für Führung von Achsschlitten beschrieben; dies und im Wesentlichen eine Linearbewegung eines Werkzeugs in einer Werkzeugaufnahme zu realisieren.

Im Folgenden werden für gleiche oder ähnliche Teile oder Teile gleicher oder ähnlicher Funktion gleiche Bezugszeichen verwendet.

Fig. 1 zeigt eine Maschinenbaugruppe 100 einer nicht näher dargestellten Fertigungsmaschine 1000; die Fertigungsmaschine 1000 kann darüber hinaus einen Maschinenrahmen, wie ein Gestell oder Fundament zur Aufnahme der Maschinenbaugruppe aufweisen als auch entsprechende Mittel einer Antriebs- und Programmierlogik für die Maschinenbaugruppe; etwa zur Steuerung einer Rotierbewegung des Werkstücks, einer Zustellbewegung der Werkzeuge und/oder einer Vorschubbewegung der Werkzeuge bzw. des Werkstücks.

Die Maschinenbaugruppe 100 selbst ist insbesondere zur Verwendung in einer Horizontalwerkzeugmaschine, d. h. in horizontaler Ausrichtung --wie in allen Fig.1, Fig. 2, Fig. 3 gezeigt-- ausgebildet; grundsätzlich ist eine Ausführung des Konzepts der Erfindung nicht auf die Verwendung in einer Horizontalfertigungsmaschine bzw. in horizontaler Ausrichtung der Maschinenbaugruppe beschränkt. Das Konzept einer Maschinenkinematik mit zentraler Hauptspindel und beidseitig zustellbarer Werkzeugaufnahme lässt sich auch im Rahmen einer vertikalen Ausrichtung, d. h. in einer Vertikalfertigungsmaschine, oder in anderer Ausrichtung umsetzen.

Im Einzelnen weist die Maschinenbaugruppe 100 in einer in Fig. 1 gezeigten ersten Ausführungsform 100A einen Aufnahmeträger 4 mit einer daran angebrachten Werkstückaufnahme 30 sowie einer ersten Werkzeugaufnahme 10 und einer zweiten Werkzeugaufnahme 20 auf; diese auf einer ersten Seite 31 bzw. einer zweiten Seite 32 der Werkstückaufnahme 30.

Ein erstes Werkzeug 11 bzw. ein zweites Werkzeug 21 der ersten bzw. zweiten Werkzeugaufnahme 10, 20 ist vorliegend als ein Zerspan oder Spanwerkzeug gebildet und diese sind genauso wie ein hier nicht näher gezeigtes Werkstück auf einer gemeinsamen Drehachse D der Werkstückaufnahme 30 angeordnet.

Konkret weist die Werkstückaufnahme 30 eine konzentrisch um die Drehachse D angeordnete Hauptspindel 33 auf, die eine drehbare Hohlwelle 33R aufweist, in deren Innenraum das Werkstück auf der Achse D aufnehmbar ist. Vorliegend ist die drehbare Hohlwelle 33R als drehbarer Teil eines Hohlwellenmotors 34, nämlich als Rotor des Hohlwellenmotors 34 in einem die Hohlwelle 33R umfänglich umgebenden als Stator ausgebildeten Haltering 33S gelagert. In dem Innenraum 33i trägt die Hohlwelle nicht näher gezeigte Aufnahmemittel, hier in Form eines Spannmittels zur Festlegung eines Werkstücks auf der Drehachse D. Diese Beschreibung gilt auch für die weiteren in Bezug auf Fig. 1, Fig. 2 und Fig. 3 erläuterten Ausführungsformen 100A, 100B, 100C eines Bearbeitungsprotals 100.

Zunächst weiter Bezug nehmend auf Fig. 1 zur Beschreibung der Ausführungsform 100A ist die Maschinenkinematik zur Umsetzung der Verfahrkinematik von Werkzeug- und Werkstückaufnahmen 10, 20, 30 mittels der im Folgenden beschriebenen Geometrie zur relativen geometrischen Anordnung von Werkstückaufnahme 30 und der ersten und zweiten Werkzeugaufnahme 10, 20 gebildet.

Der Aufnahmeträger 4 weist ein Podest 5 auf, das vorliegend die Werkstückaufnahme 30 trägt. Die Werkstückaufnahme 30 selbst ist mit einem auf dem Podest 5 angebrachten dritten Achsschlitten 3 und einer von dieser getragenen Hauptspindel 33 in Form des Hohlwellenmotors 34 gebildet. Der dritte Achsschlitten 3 ist ausgebildet, in Richtung einer x-Achse X --die die Vorschubrichtung angibt-- zu verfahren; der dritte Achsschlitten 3 ist auch als x-Schlitten bezeichnet. Das Podest 5 ist mit einer entsprechenden dritten Führung X3 für den dritten Achsschlitten 3 versehen.

Außerdem weist der Aufnahmeträger 4 auf einer ersten Seite 31 einen ersten Achsschlitten 1 und auf einer zweiten Seite 32 einen zweiten Achsschlitten 2 auf. Der erste und zweite Achsschlitten 1, 2 ist jeweils in einer ersten und zweiten Führung Z1, Z2 für den Achsschlitten 1, 2 in und/oder an dem Aufnahmeträger 4 gehalten. Insgesamt ist somit der dritte Achsschlitten 3 bzw. die dritte Führung X3 gegenüber dem ersten und zweiten Achsschlitten 1, 2 bzw. der ersten und zweiten Führung Z1, Z2 erhöht angeordnet; liegt also in oder oberhalb der Podestebene P, welche erhöht ist gegenüber der Aufnahmemittelebene E.

Der erste und zweite Achsschlitten 1, 2 ist jeweils in Richtung einer z-Achse Z verfahrbar, --die die Zustellrichtung angibt--; der erste und zweite Achsschlitten 1, 2 wird auch als z-Schlitten bezeichnet. Im vorliegenden Fall hat jeder der z-Schlitten einen nicht näher bezeichneten eigenen Antrieb als Teil der Führung Z1, Z2, nämlich einen ersten Antrieb und einen zweiten Antrieb; der dritten Achsschlitten 3 hat einen nicht näher bezeichneten dritten Antrieb als Teil der dritten Führung X3. Das Podest 5 wird insofern auch als x-Achsenpodest bezeichnet.

Im Einzelnen ist auf dem als Maschinenbett gebildeten Aufnahmeträger 4 eine durchgehende Führung --gebildet aus den Führungen Z1, Z2-- zum Tragen der z-Schlitten, nämlich des ersten und zweiten Achsschlittens 1, 2 gebildet. Die zwei Achsschlitten 1, 2 verfügen jeweils über einen eigenen Antrieb und verfahren auf der gemeinsamen Führung in beliebigem Richtungssinn ZH, ZR entlang der z-Achse hin und her bzw. vor und zurück. Auf den so bezeichneten z-Schlitten befindet sich jeweils ein erster und zweiter Aufnahmeblock 12 bzw. 22, der an seinem oberen Bereich in der Nähe der Drehachse D entsprechende Anschlussmittel für ein Werkzeug 11, 21 aufweist. Das erste und zweite Werkzeug 11,21 ist vorliegend jeweils als Zerspanwerkzeug gebildet.

Orthogonal zu den z-Führung entlang der z-Achse Z für den ersten und zweiten Achsschlitten 1, 2 ist eine Führung X3 entlang der x-Richtung X auf dem Podest 5 (x-Achsenpodest) des Aufnahmeträgers 4 angebracht; d. h. die Führung X3 des x-Achsschlittens 3 verläuft oberhalb der Führung der z-Achsenschlitten 1, 2. In und/oder auf der dritten Führung X3 befindet sich der dritte Achsschlitten 3. Auf diesem wiederum ist der als Hauptspindel 33 fungierende Hohlwellenmotor 34 in Form der Hauptspindel 33 montiert.

Die die Verfahrkinematik der Werkzeuge 11, 21 und des Werkstücks bestimmende Maschinenkinematik der Maschinenbaugruppe 100 in der Ausführungsform 100A ergibt sich wie folgt.

Das Werkstück kann um die Drehachse D in einer Links- oder in Rechts-Drehrichtung DL, DR --also gegen den Uhrzeigersinn bzw. entgegen den Uhrzeigersinn-- unter Drehen der Hohlwelle 33R gedreht werden; diese Drehbewegung gibt die Hauptbewegung (oder auch als Schnittbewegung bezeichnet) des Werkstücks wieder. Die Werkzeuge 11, 21 können entlang der Drehachse D, d. h. entlang der z-Achse in Richtung ZH zugestellt oder in Richtung ZR weggestellt werden. Die vorliegend in der Ausführungsform 100A beschriebene Maschinenbaugruppe 100 erlaubt eine vergleichsweise enge Zustellung der Werkzeuge 11, 12 an das Werkstück, da die Achsschlitten, 1, 2, 3 vergleichsweise eng aneinander platziert werden können.

Ein Vorschub des Werkstücks erfolgt unter Bewegung der Hauptspindel 33 in x-Richtung X mittels des dritten Achsschlittens 3 entlang der X-Führung X3. Durch Verfahren des Werkstücks in x-Richtung X bei zugestellten Werkzeugen 11, 21 wird ein Vorschub der Hauptspindel 33 erreicht, sodass ein Zerspanen oder Ausspannen oder sonstige spanende Bearbeitung innerhalb des Innenraums 33i der Hauptspindel 33 erfolgen kann.

Die in Fig. 2 dargestellte Ausführungsform 100B kommt ohne Podest 5 aus; eine dritte Führung X3 ist ebenso wie eine erste und zweite z-Führung Z1, Z2 unmittelbar auf dem als Maschinenbett gebildeten Aufnahmeträger 4 gebildet. Demzufolge zeigt Fig. 2 konkret auf einem Maschinenbett zwei Führungen Z1, Z2 zum Tragen der z-Schlitten in Form des ersten und zweiten Achsschlittens 1, 2 als auch eine weitere dritte Führung X3 zum Tragen des x-Schlittens in Form des Achsschlittens 3. Jeweils ein Achsschlitten 1, 2 verfügt über einen eigenen Antrieb und verfährt auf der jeweiligen Führung Z1, Z2 --also keine gemeinsame Führung wie in Fig. 1-- im beliebigen Richtungssinn ZH, ZR. Auf den z-Schlitten in Form des ersten und zweiten Achsschlittens 1, 2 befindet sich das jeweilige Werkzeug, d. h. das erste und zweite Werkzeug 11, 21 in Form eines Zerspanwerkzeugs. Orthogonal zu den so bezeichneten z-Führungen Z1, Z2 ist eine dritte Führung X3 für die x-Richtung X direkt auf dem Maschinenbett aufgebracht; die dritte x-Führung X3 verläuft also zwischen und auf gleicher Höhe wie die ersten und zweiten z-Führungen Z1, Z2. Auf der x-Führung selbst befindet sich der dritte Achsschlitten 3 auf dem der als Hauptspindel fungierende Hohlwellenmotor 33 montiert ist. Dieser verfährt das Werkstück auf der Drehachse D in x-Richtung X bei zugestellten Werkzeugen 11, 21, sodass ein Zerspanendes Ausheben im Innenbereich, d. h. innerhalb des Innenraum 33i des Hohlwellenmotors 34 am Werkstück erfolgen kann. Zwar können die Werkzeuge 11,21 in Vergleich zur Ausführungsform 100A nicht so nah an das Werkstück herangebracht werden. Jedoch ist die Flexibilität der Ausführungsform 100B verbessert.

Während bei der Ausführungsformen 100A bevorzugt die z-Schlitten auf der gemeinsamen Führung Z1, Z2 synchron verfahren werden können, z. B. zu gleichzeitigen synchronisierten Zustellung der Werkzeuge 11, 21 an das Werkstück so kann bei der Ausführungsform 100B jeder der Achsschlitten 10, 20 unabhängig von dem anderen auf einer eigenen Führung Z1, Z2 gefahren, angetrieben oder gestoppt werden.

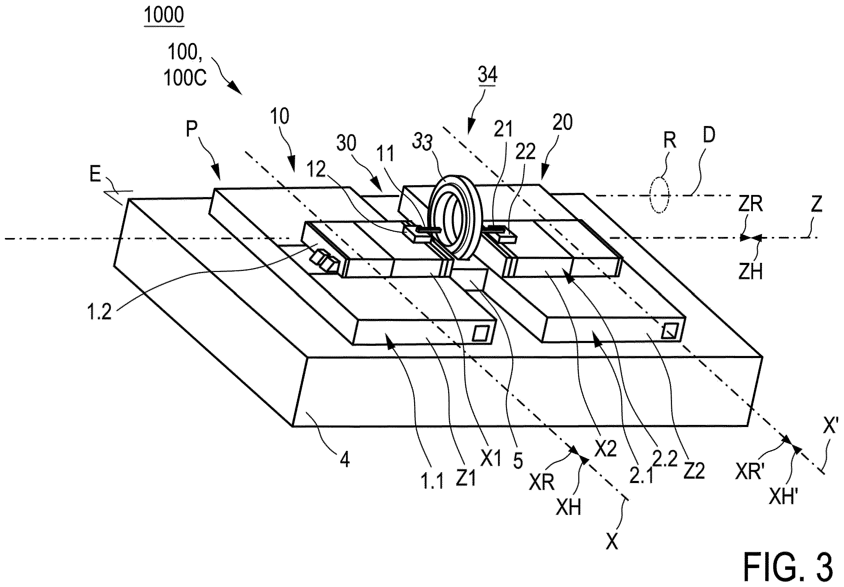

Fig. 3 zeigt eine dritte Ausführungsform 100C einer Maschinenbaugruppe 100 bei welcher der Aufnahmeträger 4 wiederum mit einem Podest 5 versehen ist. Diese trägt jedoch unmittelbar die Hauptspindel 33, d. h. ist frei von einer Führung - die Hauptspindel 33 ist direkt auf dem Podest 5 montiert und ist vorliegend auf diese Weise ortsfest konzentrisch um die Drehachse D auf dem Aufnahmeträger 4 angeordnet. Die Hauptbewegung des Werkstücks (Schnittbewegung) ist die einzige Funktion der Werkstückaufnahme 30, welche in der Lage ist mittels der Hauptspindel 33 das Werkstück in Rotation R zu versetzen in einen Richtungssinn einer Rechts- oder Linksdrehrichtung DR, DL, d. h. im Uhrzeigersinn oder entgegen dem Uhrzeigersinn um die Drehachse D.

Sowohl Zustellbewegung als auch Vorschubbewegung der Werkzeuge 11,21 relativ zum Werkstück erfolgt über die erste und zweite Werkzeugaufnahme 10, 20. Jede der Werkzeugaufnahmen 10, 20 weist zwei Achsschlitten auf. Es ist ein erster Achsschlitten 1.1 und ein weiterer erster Achsschlitten 1.2 auf einer ersten z-Führung Z1 bzw. ersten x-Führung X1 angeordnet. Ebenso weist die zweite Werkzeugaufnahme 20 einen zweiten Achsschlitten 2.1 und einen weiteren zweiten Achsschlitten 2.2 auf einer zweiten z-Führung Z2 bzw. zweiten x-Führung X2 auf. Der erste Achsschlitten 1.1 und der zweite Achsschlitten 2.1 ist, wie bereits anhand der Ausführungsform 100A, 100B erläutert, für die Zustellbewegung in Zustellrichtung zuständig, d. h. in z-Richtung z. B. in einem Richtungssinn ZH, ZR hin und her parallel zur Drehachse D.

Die weiteren ersten und zweiten Achsschlitten 1.2. bzw. 2.2 entlang der ersten und zweiten x-Führung X1, X2 dagegen sind zur Bewegung der Werkzeuge 11, 21 entlang einer Vorschubbewegung in beliebiger Richtung einer X1-Achse bzw. X2-Achse, die parallel zueinander angeordnet sind, zuständig. Die hier beschriebene dritte Ausführungsform 100C ist besonders flexibel, da sich sowohl die beiden Vorschub- als auch die beiden Zustell-Richtungen aufgrund der individuellen unabhängig antreibbaren und steuerbaren Führungen Z1, Z2, X1, X2 beliebig steuern lassen.

Konkret sind bei der dritten Ausführungsform 100C auf dem Maschinenbett des Aufnahmeträgers 4 zwei Führungen zum Tragen der z-Schlitten, nämlich die ersten und zweiten Achsschlitten 1.1, 2.1, angebracht. Jeweils einer der Achsschlitten 1.1, 2.1 verfügt über einen eigenen Antrieb und verfährt auf der jeweiligen Führung in beliebigen Richtungssinn ZH, ZR. Orthogonal zu den z-Führungen ist jeweils eine Führung für die x-Richtung auf jeweils einem x-Schlitten angebracht, der wiederum jeweils über einen Antrieb und über eine x-Führung X1, X2 verfügt. Auf der x-Führung befindet sich ein Achsschlitten, der das jeweilige Zerspanwerkzeug 11, 12 trägt.

Der als Hauptspindel 33 fungierende Hohlwellenmotor 34 ist fest auf dem Podest 5 des Maschinenbetts montiert. Die Vorschubbewegung des jeweiligen Werkzeugs 11, 21 relativ zum Werkstück wird durch den X1- und/oder X2-Antrieb der weiteren Achsschlitten 1.2., 2.2 realisiert, während die Zustellung der Werkzeuge 11, 12 über den Antrieb in den Führungen Z1- und/oder Z2 für die Achsschlitten 1.1, 2.1 erfolgt.

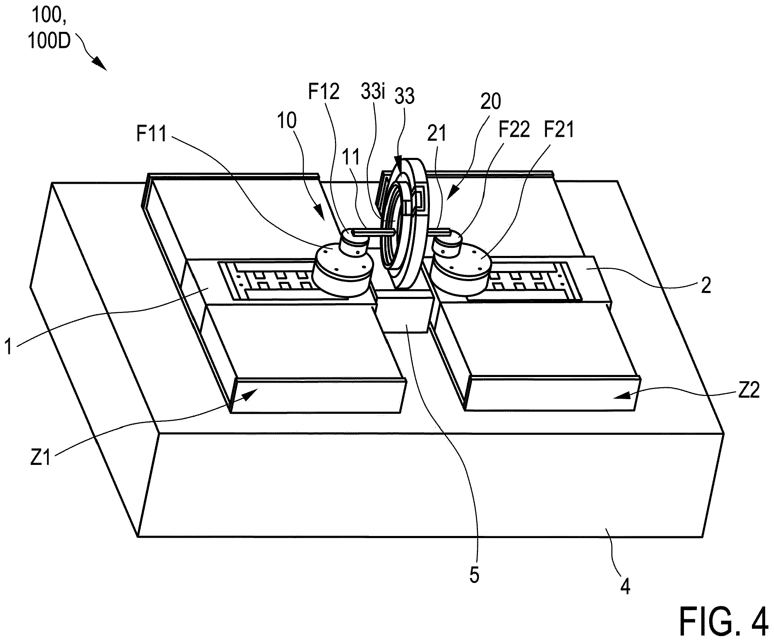

Fig. 4 zeigt eine abgewandelte Maschinenbaugruppe 100 als Ausführungsform 100D, die im Wesentlichen dem Prinzip der Ausführungsform 100C mit einem Aufnahmeträger in Form eines Podestes folgt. Der Einfachheit halber sind für identische oder ähnliche Merkmale sowie Merkmale identischer oder ähnlicher Funktion wie bisher gleiche Bezugszeichen verwendet. Im Folgenden wird insbesondere auf die variierte Ausbildung der Werkzeugaufnahmen 10, 20 Bezug genommen. Jede der Werkzeugaufnahmen 10, 20 weist einen in z-Richtungsführungen Z1, Z2 gelagerten Achsschlitten 1, 2 auf. Die Werkezuge 11, 21 sind jeweils auf einem Stapel von jeweils zwei Führungszylindern F1.1, F1.2 bzw. F2.1, F2.2 gehalten. Die Führungszylinder F1.1, F1.2 bzw. F2.1, F2.2 sind in der Lage ein Werkzeug 11, 21 gemäß Vorgabe einer Kreisführung zu führen. Ein Werkzeug 11, 21 kann somit an beliebiger Stelle des Innenraums 33i der Hauptspindel 33 platziert werden. Ähnlich wie bei der Ausführungsform 100C der Fig. 3 erübrigt sich bei der Ausführungsform 100D der Fig. 4 eine gesonderte Führung am Podest 5 für das Werkstück. Darüber hinaus lässt sich eine Kreisführung mit den Führungszylindern F1.1, F1.2 bzw. F2.1, F2.2 besonders platzsparend realisieren, sodass die Ausführungsform 100D im Vergleich zur Ausführungsform 100C besonders kompakt realisierbar ist.

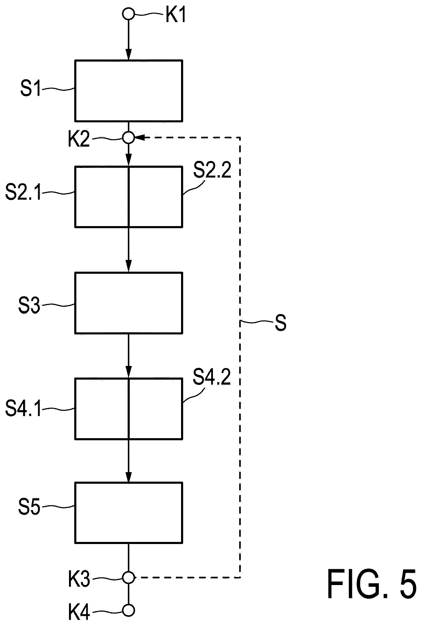

Fig. 5 zeigt schematisch den Ablauf eines Verfahrens zur Fertigung von Rotationsbauteilen in grundsätzlicher Form und verdeutlicht dazu, das Abspannen eines Werkstücks bis zur vollständigen Fertigbearbeitung desselben grundsätzlich nicht erforderlich ist; das Verfahren sichert damit die wesentlichen Vorteile des Konzepts der Erfindung.

Ausgehend von einem Startknotenpunkt K1 kann ein Werkstück, beispielweise als Halbzeug oder Rohteil --bevorzugt als Rotationsbauteil, jedenfalls aber mit einer gewissen Spiegelsymmetrie-- zur Verfügung gestellt werden. Das Werkstück kann in einem ersten Schritt S1 in der Hauptspindel entlang der Drehachse D aufgenommen werden und dort durch Einspannen festgelegt werden.

Für eine geeignete und für den Bearbeitungsvorgang gewünschten Bearbeitungsart kann ein erstes Werkzeug 11 bzw. eine erste Werkzeugaufnahme 10 auf der ersten Seite 31 der Werkstückaufnahme 30 in einem zweiten Schritt S2.1 bzw. in einem weiteren zweiten Schritt S2.2 eine zweite Werkzeugaufnahme 20 bzw. ein zweites Werkzeug 21 auf der zweiten Seite 32 der Werkstückaufnahme 30 angeordnet werden. Die Schritte S2.1 und S2.2 sind allein oder in Kombination und in beliebiger Reihenfolge ausführbar.

In einem dritten Schritt S3 kann das Werkstück durch Betätigung des Hohlwellenmotors 34 in Rotation R versetzt werden, um die Drehachse D, d. h. mit der Hauptspindel 33. In einer allein oder in Kombination und in beliebiger Reihenfolge ausführbaren Schrittfolge S4.1, S4.2 kann das erste und/oder zweite Werkzeug 11, 21 der ersten oder der zweiten Werkzeugaufnahme 10, 20 entlang der Drehachse, d. h. unter Betätigung eines Achsschlittens in z-Richtung Z zugestellt werden.

Damit beginnt ggf. die spanende Bearbeitung des Werkstücks. Insbesondere aber wird die spanende, zerspanende oder anderweitig trennende Bearbeitung des Werkstücks in einem Schritt S5 durch Vorschieben des Werkstücks unter Vorschub der Hauptspindel möglich; dies kann umgesetzt werden wie es anhand der Ausführungsformen 100A, 100B und/oder eines des ersten und zweiten Werkzeugs, entsprechend der Ausführungsform 100C erläutert ist. Insbesondere kann eine Vorschubrichtung X senkrecht zu einer Zustellrichtung Z ausgerichtet sein.

Nachfolgend kann, beginnend beim weiteren dritten Knotenpunkt K3, eine Schleife S zum zweiten Knotenpunkt K2 umgesetzt werden, d. h. unter Wiederholung der Schritte S2.1/S2.2 bis S5, d. h. ggf. unter Auswechseln der Werkzeuge, Wiederanfahren der rotierenden Bewegung des Werkstück, erneutes Zustellen S4.1, S4.2 und spanender Bearbeitung unter Vorschub des Werkzeugs im Schritt S5. Das Verfahren kann im Schritt K4 beendet werden. Die Knotenpunkte K1 und K4 lassen sich beliebig einbinden in einen weitergehenden Fertigungsprozess des Werkstücks.

### Bezugszeichenliste

- 4: Aufnahmeträger
- 1, 2, 3: Achsschlitten
- 1.1, 1.2, 2.1, 2.2: Achsschlitten
- 5: Podest
- 10, 20, 30: Werkzeugaufnahme, Werkstückaufnahme
- 11, 21: Werkzeug
- 12, 22: Aufnahmeblock
- 31: erste Seite der Werkstückaufnahme
- 32: zweite Seite der Werkstückaufnahme
- 33: Hauptspindel
- 33R: Hohlwelle, Rotor
- 33S: Haltering, Stator
- 33i: Innenraum
- 34: Hohlwellenmotor
- 100: Maschinenbaugruppe
- 100A, 100B, 100C, 100D: Ausführungsformen der Maschinenbaugruppe
- 1000: Fertigungsmaschine
- D: Drehachse
- DL: Linksdrehrichtung gegen den Uhrzeigersinn
- DR: Rechtsdrehrichtung im Uhrzeigersinn
- R: Rotation
- E: Aufnahmemittelebene
- F1.1, F1.2, F2.1, F2.2: Führungszylinder
- K1, K2, K3, K4: Knotenpunkt
- P: Podestebene
- S1, S2.1, S2.2, S4.1, S4.2S5: Schritte
- X, Z: x-Achse (Vorschubrichtung), z-Achse (Zustellrichtung)
- X1, X2, X3: Führung in x-Richtung, insbesondere mit Antrieb
- Z1, Z2: Führung in z-Richtung, insbesondere mit Antrieb
- ZH, ZR: Richtungssinn (Vor, Zurück) in z-Richtung
- XH, XR, XH', XR': Richtungssinn (Vor, Zurück) in x-Richtung /x'-Richtung

## Patentansprüche

1. Maschinenbaugruppe (100) zur Verwendung in einer Fertigungsmaschine (1000), insbesondere in horizontaler Ausrichtung einer Drehachse (D) in einer HorizontalFertigungsmaschine, mit
- einer an einem Aufnahmeträger (4) angebrachten Werkstückaufnahme (30) mit einer ersten Seite (31) und einer zweiten Seite (32) und
- einer ersten und einer zweiten Werkzeugaufnahme (10, 20), wobei
- die erste Werkzeugaufnahme (10) auf der ersten Seite (31) der Werkstückaufnahme (30) und die zweite Werkzeugaufnahme (20) auf der zweiten Seite (32) der Werkstückaufnahme (30) angeordnet ist, wobei
- die Werkstückaufnahme (30) eine Hauptspindel (33) mit einer von der ersten zur zweiten Seite (31, 32) verlaufenden Drehachse (D) aufweist und als zentrale Hauptspindel (33) zur Aufnahme eines Werkstücks an zentraler Position entlang der Drehachse (D) ausgebildet ist, und
- die Hauptspindel (33) eine drehbare Hohlwelle (33R) aufweist, in deren Innenraum (33i) das Werkstück aufnehmbar ist, **dadurch gekennzeichnet, dass**
- die Hauptspindel (33) in Form einer drehbaren Hohlwelle (33R) Teil eines Hohlwellenmotors (34) ist, wobei
- die Hauptspindel (33) auf einer deren Innenraum (33i) zugewandten Seite radial zustellbare Spannmittel als hydraulische und/oder pneumatische Spannmittel zur Festlegung des Werkstücks aufweist, wobei
- die Hauptspindel (33) eine Aufnahme für das Werkstück aufweist, die ein hydraulisches und/oder pneumatisches Spannmittel aufweist, wobei das hydraulische und/oder pneumatische Spannmittel einen Druckmantel zur Aufnahme eines unter Kolbenbetrieb generierten Druckmittels aufweist an einer Spannbuchse für die Hohlwelle, und
- die erste und/oder zweite Werkzeugaufnahme (10, 20) Teil einer Serienkinematik ist, wobei eine Zustellrichtung (Z) eines Werkzeugs entlang der Drehachse (D) der Hauptspindel (33) und senkrecht zu einer Vorschubrichtung (X) eines Werkstücks ausgerichtet ist.

2. Maschinenbaugruppe (100) nach Anspruch 1, **dadurch gekennzeichnet, dass** die Hohlwelle (33R) einen Rotor eines Hohlwellenmotors (34) ausbildet, wobei der Rotor in einem die Hohlwelle (33R) umfänglich umgebenden, einen Stator ausbildenden Haltering (33S) gelagert ist und/oder die Hohlwelle (33R) als eine Aufnahme tragende drehbare Hohlwelle (33R) in einem Stator gelagert ist, wobei die Aufnahme als ein Spannmittel ausgebildet ist.

3. Maschinenbaugruppe (100) nach Ansprüche 1 oder 2 **dadurch gekennzeichnet, dass** der Aufnahmeträger (4) zur Bildung eines Maschinenbettes eine Führung (X1, X2, X3, Z1, Z2) aufweist für die Werkstückaufnahme (30) und/oder die Werkzeugaufnahme (10, 20), wobei eine Führung für die Werkstückaufnahme (30) und/oder die Werkzeugaufnahme (10, 20) eine Linearführung oder gekrümmte Führung oder Kreisführung ist.

4. Maschinenbaugruppe (100) nach einem der vorhergehenden Ansprüche **dadurch gekennzeichnet, dass** der Aufnahmeträger (4) eine Führung für wenigstens einen Achsschlitten (1.1, 1.2, 2.1, 2.2) aufweist und/oder die Werkstückaufnahme (30) und/oder die Werkzeugaufnahme (10, 20) eine Anzahl von Führungszylindern aufweist.

5. Maschinenbaugruppe (100) nach einem der vorhergehenden Ansprüche, **dadurch gekennzeichnet, dass** wenigstens ein erster und ein zweiter Achsschlitten (1, 1.1, 2, 2.1) kollinear entlang der Drehachse (D) ausgerichtet ist oder ausrichtbar ist und/oder in einer ersten und zweiten Führung (Z1, Z2) direkt auf dem Aufnahmeträger (4) beweglich ist, wobei
- die erste und zweite Führung (Z1, Z2) eine gemeinsame Führung bilden, oder
- die erste und zweite Führung (Z1, Z2) zwei unabhängige Führungen bilden.

6. Maschinenbaugruppe (100) nach einem der vorhergehenden Ansprüche, **dadurch gekennzeichnet, dass**
- die erste Werkzeugaufnahme (10) wenigstens einen ersten Achsschlitten (1, 1.1) auf einer ersten Führung (Z1) in Zustellrichtung (Z), und
- die zweite Werkzeugaufnahme (20) wenigstens einen zweiten Achsschlitten (2, 2.1) auf einer zweiten Führung (Z2) in Zustellrichtung (Z) aufweist, und
- die Werkstückaufnahme (30) einen dritten Achsschlitten (3) aufweist der die Hauptspindel (33) trägt, auf einer dritten Führung (X3) in Vorschubrichtung (X).

7. Maschinenbaugruppe (100) nach einem der vorhergehenden Ansprüche, **dadurch gekennzeichnet, dass** der Aufnahmeträger (4) ein Podest (5) aufweist, das mit einer dritten Führung (X3) für den dritten Achsschlitten (3) versehen ist, nämlich einer dritten Führung (X3), die gegenüber einer ersten und/oder zweiten Führung (Z1, Z2) für den ersten und/oder zweiten Achsschlitten (1, 1.1, 2, 2.1) erhöht ist.

8. Maschinenbaugruppe (100) nach einem der Ansprüche 1 bis 6, **dadurch gekennzeichnet, dass** der Aufnahmeträger (4) eine dritte Führung (X3) aufweist, die auf der Höhe der ersten und/oder zweiten Führung (Z1, Z2) liegt.

9. Maschinenbaugruppe (100) nach einem der Ansprüche 1 bis 6, **dadurch gekennzeichnet, dass** die Werkstückaufnahme (30) direkt die Hauptspindel (33) trägt.

10. Maschinenbaugruppe (100) nach einem der Ansprüche 1 bis 6, **dadurch gekennzeichnet, dass** der Aufnahmeträger (4) ein Podest (5) aufweist, das frei von einer Führung ist.

11. Maschinenbaugruppe (100) nach einem der Ansprüche 1 bis 6, **dadurch gekennzeichnet, dass** die erste Werkzeugaufnahme (10) einen ersten Achsschlitten (1.2) in Vorschubrichtung (X) und darunterliegend einen weiteren ersten Achsschlitten (1.1) in Zustellrichtung (Z) aufweist, und/oder die zweite Werkzeugaufnahme (20) einen zweiten Achsschlitten (2.2) in Vorschubrichtung (X) und darunterliegend einen weiteren zweiten Achsschlitten (2.1) in Zustellrichtung (Z) aufweist.

12. Maschinenbaugruppe (100) nach einem der vorhergehenden Ansprüche, **dadurch gekennzeichnet, dass** ein in der ersten und/oder zweiten Werkzeugaufnahme (10, 20) aufgenommenes erstes und/oder zweites Werkzeug (11, 12) ein Trennwerkzeug und/oder eine Span- und/oder Zerspanwerkzeug ist, wobei das Werkzeug ausgewählt ist aus der Gruppe bestehend aus: Dreh-, Fräs-, Schleif-, Läpp-, Glätt-Werkzeug.

13. Fertigungsmaschine (1000), insbesondere Werkzeugmaschine zum Fügen, Trennen, Umformen, Läppen und/oder Beschichten, Stoffeigenschaftsändern, mit einer Maschinenbaugruppe (100) nach einem der vorhergehenden Ansprüche auf einem Maschinenrahmen.

14. Verwendung einer Maschinenbaugruppe (100) nach einem der vorhergehenden Ansprüche 1 bis 12 oder einer Fertigungsmaschine (1000) nach Anspruch 13 zur Herstellung eines Werkstücks einer Strahlführungsscheibe, für eine Strahlführung einer strahlführenden Einrichtung einer Licht-Optik oder einer Teilchenoptik wie einer Elektronenoptik, Isotopenoptik, Elementarteilchenoptik oder sonstigen Teilchenoptik der strahlführenden Einrichtung.

15. Verfahren zur Fertigung von Rotationsbauteilen mittels einer Maschinenbaugruppe (100) nach einem der Ansprüche 1 bis 12, aufweisend die Schritte:
- Bereitstellen eines Werkstücks;
- Aufnahme des Werkstücks entlang der Drehachse (D) einer zentralen Hauptspindel (33), die von der ersten zur zweiten Seite (31, 32) verläuft, wobei das Werkstück in einer Aufnahme der Hauptspindel in radial zustellbaren Spannmitteln auf einer dem Innenraum (33i) der Hauptspindel zugewandten Seite festgelegt ist, und die Spannmittel hydraulisch und/oder pneumatisch zugestellt werden;
- Anordnen einer ersten Werkzeugaufnahme (10) auf der ersten Seite (31) der Werkstückaufnahme (30) und einer zweiten Werkzeugaufnahme (20) auf der zweiten Seite (32) der Werkstückaufnahme (30);
- Rotieren des Werkstücks um die Drehachse (D) mittels der Hauptspindel (33),
- Zustellen eines ersten Werkzeugs (11) der ersten Werkzeugaufnahme (10) und eines zweiten Werkzeugs (21) der zweiten Werkzeugaufnahme (20) entlang der Drehachse (D)
- Vorschieben des Werkstücks unter Vorschub der Hauptspindel (33) und/oder wenigstens eines des ersten und zweiten Werkzeugs (11, 21), wobei eine Vorschubrichtung senkrecht zu einer Zustellrichtung (Z) ist.

## Claims

1. Machine assembly (100) for use in a manufacturing machine (1000), in particular in a horizontal orientation of an axis of rotation (D) in a horizontal manufacturing machine, comprising
- a workpiece fixture (30) which is mounted on a fixture carrier (4) and has a first side (31) and a second side (32), and
- a first and a second tool holding fixture (10, 20), wherein
- the first tool holding fixture (10) is arranged on the first side (31) of the workpiece fixture (30) and the second tool holding fixture (20) is arranged on the second side (32) of the workpiece fixture (30), wherein
- the workpiece fixture (30) has a main spindle (33) with an axis of rotation (D) running from the first to the second side (31, 32), and is designed as the central main spindle (33) for holding a workpiece at a central position along the axis of rotation (D), and
- the main spindle (33) has a rotatable hollow shaft (33R), in the interior (33i) of which the workpiece can be held, **characterized in that**
- the main spindle (33) in the form of a rotatable hollow shaft (33R) is part of a hollow shaft motor (34), wherein
- the main spindle (33) has, on a side facing the interior (33i) thereof, radially feedable clamping means as hydraulic and/or pneumatic clamping means for securing the workpiece, wherein
- the main spindle (33) has a fixture for the workpiece, which fixture has a hydraulic and/or pneumatic clamping means, wherein the hydraulic and/or pneumatic clamping means has a pressure shell for receiving a pressure medium generated under piston operation on a clamping bushing for the hollow shaft, and
- the first and/or second tool holding fixture (10, 20) is part of a series kinematic system, wherein a feeding direction (Z) of a tool is oriented along the axis of rotation (D) of the main spindle (33) and is oriented perpendicularly to an advancing direction (X) of a workpiece.

2. Machine assembly (100) according to claim 1, **characterized in that** the hollow shaft (33R) forms a rotor of a hollow shaft motor (34), wherein the rotor is mounted in a retaining ring (33S) which surrounds the hollow shaft (33R) circumferentially and forms a stator, and/or the hollow shaft (33R) is mounted as a fixture-bearing, rotatable hollow shaft (33R) in a stator, wherein the fixture is designed as a clamping means.

3. Machine assembly (100) according to claim 1 or 2, **characterized in that**, in order to form a machine bed, the fixture carrier (4) has a guide (X1, X2, X3, Z1, Z2) for the workpiece fixture (30) and/or the tool holding fixture (10, 20), wherein a guide for the workpiece fixture (30) and/or the tool holding fixture (10, 20) is a linear guide or a curved guide or a circular guide.

4. Machine assembly (100) according to one of the preceding claims, **characterized in that** the fixture carrier (4) has a guide for at least one axis slide (1.1, 1.2, 2.1, 2.2), and/or the workpiece fixture (30) and/or the tool holding fixture (10, 20) has a number of guide cylinders.

5. Machine assembly (100) according to one of the preceding claims, **characterized in that** at least one first and one second axis slide (1, 1.1, 2, 2.1) is oriented collinearly along the axis of rotation (D) or can be oriented therealong, and/or is movable directly on the fixture carrier (4) in a first and second guide (Z1, Z2), wherein
- the first and second guide (Z1, Z2) form a common guide, or
- the first and second guide (Z1, Z2) form two independent guides.

6. Machine assembly (100) according to one of the preceding claims, **characterized in that**
- the first tool holding fixture (10) has at least one first axis slide (1, 1.1) on a first guide (Z1) in the feeding direction (Z), and
- the second tool holding fixture (20) has at least one second axis slide (2, 2.1) on a second guide (Z2) in the feeding direction (Z), and
- the workpiece fixture (30) has a third axis slide (3) which carries the main spindle (33), on a third guide (X3), in the advancing direction (X).

7. Machine assembly (100) according to one of the preceding claims, **characterized in that** the fixture carrier (4) has a platform (5) which is provided with a third guide (X3) for the third axis slide (3), namely a third guide (X3) which is raised in relation to a first and/or second guide (Z1, Z2) for the first and/or second axis slide (1, 1.1, 2, 2.1).

8. Machine assembly (100) according to one of claims 1 to 6, **characterized in that** the fixture carrier (4) has a third guide (X3) which is level with the first and/or second guide (Z1, Z2).

9. Machine assembly (100) according to one of claims 1 to 6, **characterized in that** the workpiece fixture (30) carries the main spindle (33) directly.

10. Machine assembly (100) according to one of claims 1 to 6, **characterized in that** the fixture carrier (4) has a platform (5) which is free from a guide.

11. Machine assembly (100) according to one of claims 1 to 6, **characterized in that** the first tool holding fixture (10) has a first axis slide (1.2) in the advancing direction (X) and, located therebelow, a further first axis slide (1.1) in the feeding direction (Z), and/or the second tool holding fixture (20) has a second axis slide (2.2) in the advancing direction (X) and, located therebelow, a further second axis slide (2.1) in the feeding direction (Z).

12. Machine assembly (100) according to one of the preceding claims, **characterized in that** a first and/or second tool (11, 12) held in the first and/or second tool holding fixture (10, 20) is a parting-off tool and/or a material-removing and/or chip-removing tool, wherein the tool is selected from the group consisting of: turning tool, milling tool, grinding tool, lapping tool, smoothing tool.

13. Manufacturing machine (1000), in particular machine tool for joining, separating, deforming, lapping and/or coating, changing material properties, with a machine assembly (100) according to one of the preceding claims on a machine frame.

14. Use of a machine assembly (100) according to one of the preceding claims 1 to 12 or a manufacturing machine (1000) according to claim 13 for producing a workpiece of a beam-guiding disc, for beam guidance of a beam-guiding device of light optics or particle optics, such as electron optics, isotope optics, elemental particle optics or other particle optics of the beam-guiding device.

15. Method for manufacturing rotational components by means of a machine assembly (100) according to one of claims 1 to 12, comprising the steps:
- providing a workpiece;
- holding the workpiece along the axis of rotation (D) of a central main spindle (33) which runs from the first to the second side (31, 32), wherein the workpiece is secured in a fixture of the main spindle in radially feedable clamping means on a side facing the interior (33i) of the main spindle, and the clamping means are hydraulically and/or pneumatically fed;
- arranging a first tool holding fixture (10) on the first side (31) of the workpiece fixture (30) and a second tool holding fixture (20) on the second side (32) of the workpiece fixture (30);
- rotating the workpiece about the axis of rotation (D) by means of the main spindle (33),
- feeding a first tool (11) of the first tool holding fixture (10) and a second tool (21) of the second tool holding fixture (20) along the axis of rotation (D),
- advancing the workpiece by advancing the main spindle (33) and/or at least one of the first and second tools (11, 21), wherein an advancing direction is perpendicular to a feeding direction (Z).

## Revendications

1. Module de machine (100) destiné à être utilisé dans une machine de fabrication (1000), en particulier dans une orientation horizontale d'un axe de rotation (D) dans une machine de production horizontale, avec
- un logement de pièce (30) installé au niveau d'un support de logement (4), avec un premier côté (31) et un deuxième côté (32), et
- un premier et un deuxième logement d'outil (10, 20), dans lequel
- le premier logement d'outil (10) est disposé sur le premier côté (31) du logement d'outil (30) et le deuxième logement d'outil (20) est disposé sur le deuxième côté (32) du logement de pièce (30), dans lequel
- le logement d'outil (30) présente une broche principale (33) avec un axe de rotation (D) s'étendant depuis le premier côté vers le deuxième côté (31, 32) et est réalisé sous la forme d'une broche principale (33) centrale servant à recevoir une pièce au niveau d'une position centrale le long de l'axe de rotation (D), et
- la broche principale (33) présente un arbre creux (33R) pouvant tourner, dans l'espace intérieur (33i) duquel la pièce peut être logée, **caractérisé en ce que**
- la broche principale (33) se présentant sous la forme d'un arbre creux (33R) pouvant tourner fait partie d'un moteur à arbre creux (34), dans lequel
- la broche principale (33) présente, sur un côté tourné vers son espace intérieur (33i), des moyens de serrage pouvant être rapprochés radialement faisant office de moyens de serrage hydrauliques et/ou pneumatiques servant à fixer la pièce, dans lequel
- la broche principale (33) présente un logement pour la pièce, qui présente un moyen de serrage hydraulique et/ou pneumatique, dans lequel le moyen de serrage hydraulique et/ou pneumatique présente une enveloppe de pression servant à recevoir un moyen de pression généré lors du fonctionnement de piston au niveau d'une douille de serrage pour l'arbre creux, et
- le premier et/ou le deuxième logement d'outil (10, 20) font partie d'une cinématique en série, dans lequel une direction de rapprochement (Z) d'un outil est orientée le long de l'axe de rotation (D) de la broche principale (33) et de manière perpendiculaire par rapport à une direction d'avance (X) d'une pièce.

2. Module de machine (100) selon la revendication 1, **caractérisé en ce que** l'arbre creux (33R) forme un rotor d'un moteur à arbre creux (34), dans lequel le rotor est monté dans une bague de maintien (33S) entourant de manière périphérique l'arbre creux (33R), formant un stator et/ou l'arbre creux (33R) est monté dans un stator sous la forme d'un arbre creux (33R) pouvant tourner supportant un logement, dans lequel le logement est réalisé sous la forme d'un moyen de serrage.

3. Module de machine (100) selon les revendications 1 ou 2, **caractérisé en ce que** le support de logement (4) présente, afin de constituer un banc de machine, un guidage (X1, X2, X3, Z1, Z2) pour le logement de pièce (30) et/ou le logement d'outil (10, 20), dans lequel un guidage pour le logement de pièce (30) et/ou le logement d'outil (10, 20) est un guidage linéaire ou un guidage incurvé ou un guidage circulaire.

4. Module de machine (100) selon l'une quelconque des revendications précédentes, **caractérisé en ce que** le support de logement (4) présente un guidage pour au moins un chariot axial (1.1, 1.2, 2.1, 2.2), et/ou le logement de pièce (30) et/ou le logement d'outil (10, 20) présente un nombre de cylindres de guidage.

5. Module de machine (100) selon l'une quelconque des revendications précédentes, **caractérisé en ce qu'**au moins un premier et un deuxième chariot axial (1, 1.1, 2, 2.1) sont orientés ou peuvent être orientés de manière colinéaire le long de l'axe de rotation (D) et/ou sont mobiles directement sur le support de logement (4) dans un premier et dans un deuxième guidage (Z1, Z2), dans lequel
- le premier et le deuxième guidage (Z1, Z2) constituent un guidage commun, ou
- le premier et le deuxième guidage (Z1, Z2) constituent deux guidages indépendants.

6. Groupe de machine (100) selon l'une quelconque des revendications précédentes, **caractérisé en ce que**
- le premier logement d'outil (10) présente au moins un premier chariot axial (1, 1.1) sur un premier guidage (Z1) dans une direction de rapprochement (Z), et
- le deuxième logement d'outil (20) présente au moins un deuxième chariot axial (2, 2.1) sur un deuxième guidage (Z2) dans une direction de rapprochement (Z), et
- le logement de pièce (30) présente un troisième chariot axial (3), qui supporte la broche principale (33), sur un troisième guidage (X3) dans la direction d'avance (X).

7. Module de machine (100) selon l'une quelconque des revendications précédentes, **caractérisé en ce que** le support de logement (4) présente un piédestal (5), qui est pourvu d'un troisième guidage (X3) pour le troisième chariot axial (3), à savoir un troisième guidage (X3), qui est surélevé par rapport à un premier et/ou deuxième guidage (Z1, Z2) pour le premier et/ou deuxième chariot axial (1, 1.1, 2, 2.1).

8. Module de machine (100) selon l'une quelconque des revendications 1 à 6, **caractérisé en ce que** le support de logement (4) présente un troisième guidage (X3), qui se situe à la hauteur du premier et/ou deuxième guidage (Z1, Z2).

9. Module de machine (100) selon l'une quelconque des revendications 1 à 6, **caractérisé en ce que** le logement de pièce (30) supporte directement la broche principale (33).

10. Module de machine (100) selon l'une quelconque des revendications 1 à 6, **caractérisé en ce que** le support de logement (4) présente un piédestal (5), qui est dépourvu d'un guidage.

11. Module de machine (100) selon l'une quelconque des revendications 1 à 6, **caractérisé en ce que** le premier logement d'outil (10) présente un premier chariot axial (1.2) dans une direction d'avance (X) et, situé en dessous, un autre premier chariot axial (1.1) dans une direction de rapprochement (Z), et/ou le deuxième logement d'outil (20) présente un deuxième chariot axial (2.2) dans la direction d'avance (X) et, situé en dessous, un autre deuxième chariot axial (2.1) dans une direction de rapprochement (Z).

12. Module de machine (100) selon l'une quelconque des revendications précédentes, **caractérisé en ce qu'**un premier et/ou deuxième outil (11, 12) logé dans le premier et/ou deuxième logement d'outil (10, 20) est un outil de séparation et/ou un outil d'enlèvement de copeaux et/ou de coupe, dans lequel l'outil est choisi par le groupe constitué : d'un tour, d'un outil de fraisage, d'un outil de ponçage, d'un outil de rodage, d'un lissoir.

13. Machine de fabrication (1000), en particulier machine-outil servant à assembler, séparer, façonner, roder et/ou revêtir, modifier des propriétés de matière, avec un module de machine (100) selon l'une quelconque des revendications précédentes sur un bâti de machine.

14. Utilisation d'un module de machine (100) selon l'une quelconque des revendications 1 à 12,
ou d'une machine de fabrication (1000) selon la revendication 13 servant à produire une pièce d'un disque de guidage de rayonnement, pour un guidage de rayonnement d'un dispositif de guidage de rayonnement d'une optique de lumière ou d'une optique particulaire, telle qu'une optique électronique, une optique isotopique, une optique particulaire de type élémentaire ou une autre optique particulaire du dispositif de guidage de rayonnement.

15. Procédé servant à fabriquer des composants de rotation au moyen d'un module de machine (100) selon l'une quelconque des revendications 1 à 12, présentant les étapes consistant à :
- fournir une pièce ;
- loger la pièce le long de l'axe de rotation (D) d'une broche principale (33) centrale, qui s'étend depuis le premier côté vers le deuxième côté (31, 32), dans lequel la pièce est fixée dans un logement de la broche principale dans des moyens de serrage pouvant être rapprochés de manière radiale sur un côté tourné vers l'espace intérieur (33i) de la broche principale, et les moyens de serrage sont rapprochés de manière hydraulique et/ou pneumatique ;
- disposer un premier logement d'outil (10) sur le premier côté (31) du logement d'outil (30) et d'un deuxième logement d'outil (20) sur le deuxième côté (32) du logement de pièce (30) ;
- faire tourner la pièce autour de l'axe de rotation (D) au moyen de la broche principale (33) ;
- rapprocher un premier outil (11) du premier logement d'outil (10) et un deuxième outil (21) du deuxième logement d'outil (20) le long de l'axe de rotation (D) ;
- avancer la pièce en avançant la broche principale (33) et/ou au moins un parmi le premier et le deuxième outil (11, 21), dans lequel une direction d'avance est perpendiculaire par rapport à une direction de rapprochement (Z).
